Europäisches Patentamt

European Patent Office

Office européen des brevets

(11) Publication number: **0 308 140 B2**

(12) # NEW EUROPEAN PATENT SPECIFICATION

(45) Date of publication of the new patent specification:
29.11.95

(51) Int. Cl.6: **B01J 37/08**, B01J 23/10, B01J 21/04

(21) Application number: **88308312.3**

(22) Date of filing: **08.09.88**

(54) **Alumina-based catalysts, their production and use.**

(30) Priority: **18.09.87 GB 8722008**

(43) Date of publication of application:
**22.03.89 Bulletin 89/12**

(45) Publication of the grant of the patent:
**21.08.91 Bulletin 91/34**

(45) Mention of the opposition decision:
**29.11.95 Bulletin 95/48**

(84) Designated Contracting States:
**BE DE FR GB IT NL**

(56) References cited:
EP-A- 0 044 117     EP-A- 0 044 118
EP-A- 0 130 835     EP-A- 0 208 220
DE-A- 2 652 556     FR-A- 2 328 512
GB-A- 1 457 936     US-A- 3 789 022
US-A- 4 061 594     US-A- 4 414 140
US-A- 4 542 113

Applied Catalysis, vol 9, 1984. Elsevier Science Publishers BV, Amsterdam. pp 129-132, H Schaper et al, "The Influence of High Partial Steam Pressures on the Sintering of Lanthanum Oxide Doped Gamma Alumina"

(73) Proprietor: **THE BRITISH PETROLEUM COM-PANY P.L.C.**
**Britannic House,**
**1 Finsbury Circus**
**London EC2M 9BA (GB)**

(72) Inventor: **Kneale, Brian, c/o The BP Company plc**
**Research Center,**
**Chertsey Road**
**Sunbury-on-Thames,**
**Middlesex TW16 7LN (GB)**

(74) Representative: **Denbigh, Keith Warwick et al**
**c/o The British Petroleum Company plc**
**Patents Division**
**Chertsey Road**
**Sunbury-on-Thames**
**Middlesex, TW16 7LN (GB)**

EP 0 308 140 B2

Journal of Molecular Catalysis, vol 25, 1984. Elsevier Sequoia, The Netherlands. pp 253-262, Michael R Gelsthorpe et al, "The effect ofLanthanum Additives on the Catalytic Activities of Ni-Al2O3 Coprecipitated Catalysts for the Methanation of Carbon Monoxide"

Applied Catalysis, vol 7, 1983. Elsevier Science Publishers, BV, Amsterdam. pp 211-220, H Schaper et al, "The Influence of Lanthanum Oxide on the Thermal Stability of Gamma Alumina Catalyst Supports"

Applied Catalysis, vol 16, 1985. Elsevier Science Publishers, BV, Amsterdam. pp 417-429, H Schaper et al, "Synthesis of Thermostable Nickel-Alumina Catalysts by Deposition-Precipitation"

## Description

The present invention relates to alumina-based catalysts, their production and use.

Alumina-based catalysts are used in a variety of hydrocarbon conversion reactions. There is a described and claimed in EP 0044117 a catalyst precursor comprising nickel, aluminium, and lanthanum of a defined formula and supported on a preformed low surface area ceramic matrix, i.e., alpha alumina. Alumina based catalysts may be used in fixed, moving, or recirculating particulate bed reactors. In all types of bed, resistance to attrition is important. There can be considerable breakdown of catalyst during the filling of fixed catalyst bed reactors and, clearly, catalysts in moving or recirculating particulate bed reactors, have to be attrition resistant. The shape of the catalyst particles can vary but they are preferably spheroidal to give uniform bed packing.

A convenient method of making spheroidal alumina catalysts is the oil-drop method, in which drops of an alumina hydrosol and a gelling agent are passed into a hot oil bath. A method of preparing high density, high crush strength spheroidal alumina from alumina hydrates By the oil drop method is described and claimed in US Patent No. 4542113 and involves using an alumina sol of defined characteristics and incorporating urea in the sol.

In addition to high attrition resistance it is desirable for certain applications that the catalysts have a low bulk density. A lower bulk density necessarily means a more porous structure which generally leads to enhanced catalytic activity.

Our copending UK application No. 8714661 (BP Case No. 6673) filed on 23.06.87 (corresponding to EP-A-0296726) discloses an alumina-based catalyst having improved resistance to attrition prepared from:

(a) an alumina catalyst having a bulk density of at least 0.6g/ml and a pore volume of less than 0.6ml/g, by

(b) heating the alumina of (a) to a temperature of at least 1000°C in the presence of a sintering agent, and

(c) recovering a sintered alumina-based catalyst having a bulk density of at least 1.5g/ml and an attrition resistance as measured by attrition loss of less than 0.01%wt/hour/1 (gas).

The preferred catalyst of that application is a nickel/alumina catalyst. A problem we have found with nickel/alumina catalysts is that reducing their bulk density leads to a marked increase in their attrition. It is desirable that the reduction in bulk density is achieved whilst maintaining high attrition resistance.

We have found that the aforesaid problem can be overcome by incorporating into the catalyst a refractory oxide of a rare earth metal.

Accordingly the present invention provides a process for the production of alumina based composition for use as a catalyst, which process comprises sintering a composition, which prior to sintering comprises a substantially gamma alumina having a bulk density of at least 0.6g/ml and a pore volume of less than 0.6ml/g, a Group VIII metal sintering agent and a refractory oxide of a rare earth metal, by heating to a temperature of at least 1000°C and recovering a sintered alumina-based composition.

The starting alumina is important, it having been found that apparently similar aluminas respond very differently to the sintering treatment. The preferred alumina catalyst is a spheroidal alumina catalyst and the preferred method of preparing a spheroidal alumina catalyst suitable for use as the starting material for the present invention is that described in US Patent No. 4,542,113.

The sintering agent is preferably an oxide of an element of Group VIII of the Periodic Table according to Mendeleef and more preferably nickel oxide.

Group VIII elements are well known catalytic components of alumina-based catalysts, so the use of a Group VIII element as the sintering agent may serve the double purpose, not only of assisting the sintering, but of producing a finished catalyst containing a known catalytic component.

The rare earth metal which in refractory oxide form is a component of the composition is preferably a rare earth metal of the lanthanide series, i.e. metals having an atomic number in the range from 57 to 71, though rare earth metals of the actinide series, i.e. metals having an atomic number in the range from 89 to 103, may be employed. Clearly on environmental grounds the non-radioactive rare earth metals are very much preferred. A preferred rare earth metal oxide is lanthanum oxide.

Before use as catalysts the compositions require sintering.

The temperature to which the alumina catalyst is subjected may suitably be at least 1200°C. A practical upper temperature limit may be 1500°C. The heating may be carried out in a flowing stream of air or oxygen containing inert gas or in a non-reducing atmosphere. The heating up and cooling down of the catalyst may be at a uniform and fairly low rate (e.g. about 2°C/minute) to avoid undue thermal stress on the catalyst.

3

The pre-sintered composition may suitably be prepared by loading the alumina with the rare earth metal oxide and the sintering agent, which may be added in any order, by any means known in the art, for example by impregnation or by precipitation, preferably by impregnation. Using Group VIII metals as sintering agents, impregnation may suitably be accomplished using a thermally decomposable compound of the Group VIII metal, for example a salt such as the nitrate. The rare earth metal may suitably be added in the form of a compound, for example a salt thermally decomposable to the oxide.

An advantage of incorporating a rare earth metal oxide in the sintered catalyst composition is that the bulk density of the composition can be reduced whilst maintaining a low attrition rate. The attrition test (of which further details are provided hereinafter) involves subjecting a recirculating bed of solids to a high velocity gas jet (300 to 400 m/s) and monitoring weight loss against time.

The sintered compositions of the present invention may be used as catalysts.

Nickel-alumina catalysts are well known catalysts for the steam reforming of hydrocarbons and the sintered nickel-alumina catalysts of the present invention may be used as steam-reforming catalysts or in any other process for which nickel-alumina is a known catalyst.

Further, since the sintering is carried out at a temperature of at least $1000\,^\circ C$, it follows that the catalyst produced can be used in high temperature processes where temperatures of the order of $1000\,^\circ C$ or higher may be required.

A preferred reaction for which the catalyst of the present invention may be used is thus the steam reforming of hydrocarbon feeds.

The invention will now be illustrated by reference to the following Examples.

In the Examples reference is made to the attrition rate. The specially designed test and the equipment used therefor are used only to obtain comparative attrition rates. The equipment consists of a vertical glass tube (51 mm internal diameter) containing a conical base section ($40\,^\circ$ included angle to the tube axis) in which is located centrally a glass feed tube (1.5 mm internal diameter). The catalyst charge is constant for each test (25 ml), the gas feed being either nitrogen or air.

## Example

### A. Preparation of Alumina Spheres

Alumina spheres were produced by a method similar to that of US Patent No. 4,542,113.

The material was in the form of spheres of approximately 2 mm diameter and consisted of gamma-alumina. The physical characteristics of the gamma-alumina prior to impregnation were as follows:

| | |
|---|---|
| Pore volume | = 0.48 ml/g |
| Nitrogen, BET, surface area | = 220 $m^2$/g |
| Bulk density | = 0.78 g/ml |
| Gamma-alumina crystalline size | = 5 nm (50 Angstrom) |
| Attrition loss | = 8% wt./hr |

The alumina was characterised by a fairly low pore volume and relatively high bulk density, indicating microporosity.

### B. Preparation of Pre-sintered Composition

Portions of the alumina-prepared as in A above were impregnated with nickel nitrate and lanthanum nitrate using the pore fill/incipient wetness technique in amounts sufficient to give compositions containing 10% wt. nickel and 5, 10 and 15% wt. lanthanum and calcined to convert the nickel and lanthanum salts to nickel and lanthanum oxides respectively.

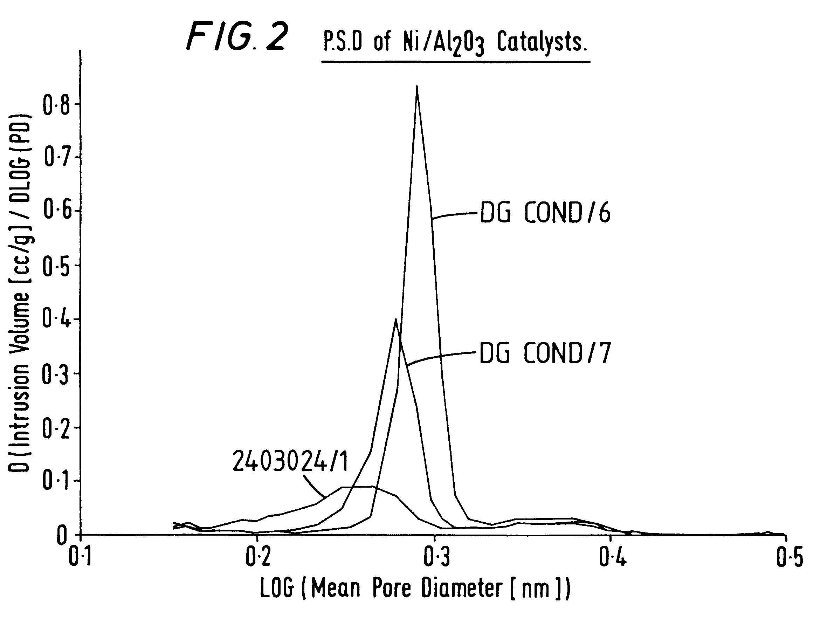

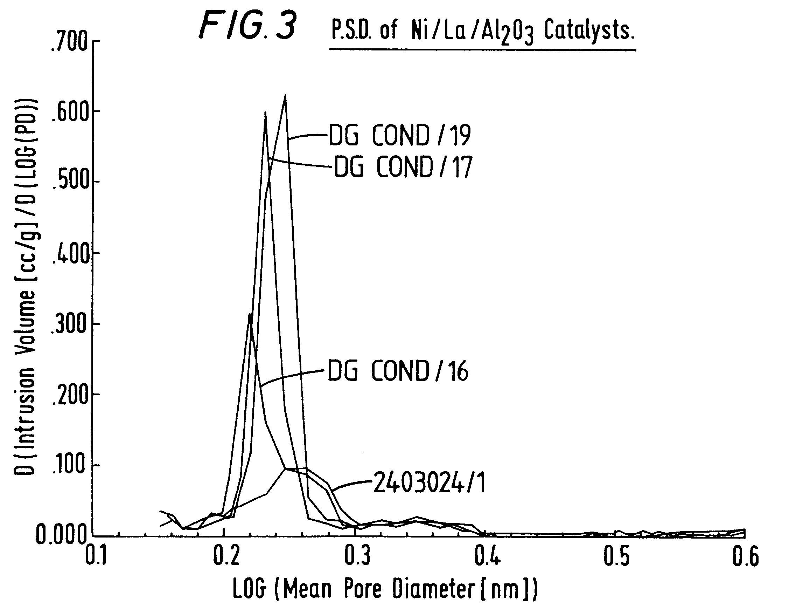

Pore Size Distribution Analysis (PSD), by mercury porosimetry points to the mechanism by which the lanthanum oxide successfully reduces the bulk density while maintaining attriton resistance, ie the lanthanum oxide stabilises pores in the 16 to 32 nm (160 to 320 Angstrom) region, which under normal heat treatment conditions collapse into 65 to 100 nm (650 to 1000 Angstrom) pores for non-lanthanum oxide — containing $NiO/Al_2O_3$ (less than or equal to 5.5wt.%Ni) catalysts. This is illustrated in Figures 2 and 3. It is emphasised that this is only a theory supported by the experimental results and is not intended to be binding in any manner.

C. Preparation of Sintered Compositions of the Invention

The compositions obtained in B above were sintered at 1200°C.

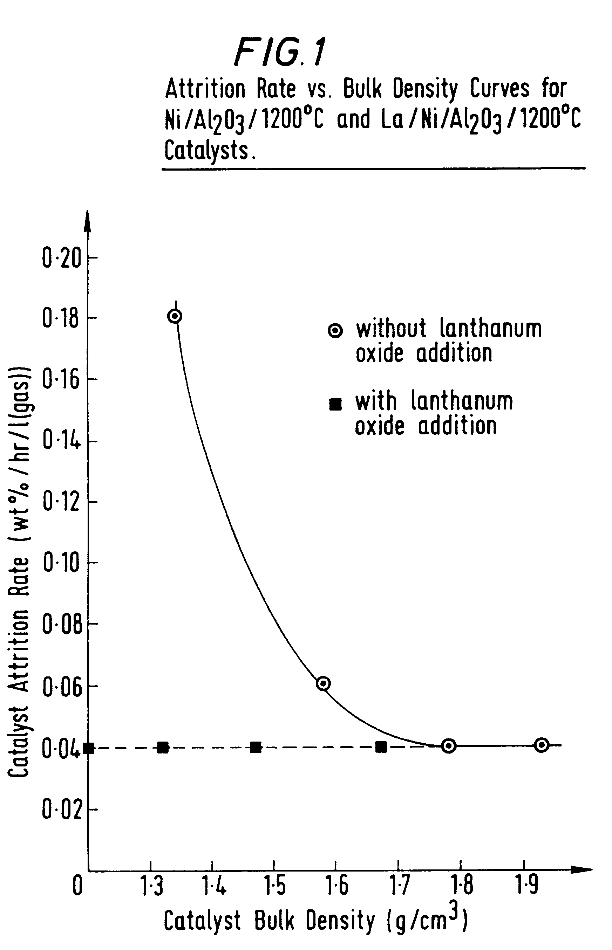

The bulk density and attrition rate of the sintered catalyst compositions were determined. The results of the determinations are given in Table 1 and Figure 1.

Comparison Tests

(i) Varying the Nickel Loading

Sintered catalyst compositions containing 2, 5, 10, 15 and 20% wt. nickel were prepared in a similar manner to the sintered catalyst compositions of the Example.

These are not compositions according to the present invention because they do not contain a rare earth metal oxide.

The bulk density and attrition resistance of the sintered catalyst compositions were determined. The results of the determinations are given in Table 2 and Figure 2.

Table 1

| Catalyst Batch | % wt La | Bulk density $(g/cm^3)$ | Attrition Rate (% wt/h/l(gas)) |
|---|---|---|---|
| 240324/1 | 0 | 1.78 | 0.04 |
| DG COND/5 | 2 | 1.67 | 0.04 |
| DG COND/16 | 5 | 1.47 | 0.04 |
| DG COND/17 | 10 | 1.32 | 0.04 |
| DG COND/19 | 15 | 1.20 | 0.04 |

Table 2

| Catalyst Batch | % wt Ni | Bulk density $(g/cm^3)$ | Attrition Rate (% wt/h/l(gas)) |
|---|---|---|---|
| DG COND/6 | 2 | 1.34 | 0.18 |
| DG COND/7 | 5 | 1.58 | 0.06 |
| 2403024/1 | 10 | 1.78 | 0.04 |
| 2403024/2 | 15 | 1.93 | 0.04 |
| 2403024/3 | 20 | 2.10 | 0.035 |

5

(ii) <u>Lowering the Bulk Density of 10% Ni/Alumina Catalysts (Calcined at about 1200°C)</u>

10% Ni/alumina catalysts having a lower bulk density were prepared and their attrition rate measured. The results are given in Table 3.

<u>Table 3</u>

| Catalyst<br>Batch | Bulk Density<br>(g/ml) | Attrition Rate<br>(wt%/h/l(gas)) |
|---|---|---|
| DG COND/1 | 1.43 | 0.13 |
| * | 1.52 | 0.09 |
| 2403024/1 | 1.78 | 0.04 |

**\* No identifying batch number**

(iii) <u>Use of an Additive which Lowers the Bulk Density but Decreases the Attrition Resistance</u>

A 10% Ni/2% Ba/alumina catalyst was prepared in the manner of the Example. Its bulk density was 1.26 g/ml and its attrition rate was 0.44 wt%/h/l (gas) (BATCH DG COND/4).

**Claims**

1. A process for the production of alumina based composition for use as a catalyst, which process comprises sintering a composition, which prior to sintering comprises a substantially gamma alumina having a bulk density of at least 0.6g/ml and a pore volume of less than 0.6ml/g, a Group VIII metal sintering agent and a refractory oxide of a rare earth metal, by heating to a temperature of at least 1000°C and recovering a sintered alumina-based composition.

2. A process according to claim 1 wherein the alumina is a spheroidal alumina.

3. A process according to claim 1 or 2 wherein the sintering agent is an oxide of an element of Group VIII of the Periodic Table.

4. A process according to claim 3 wherein the sintering agent is nickel oxide.

5. A process according to any one of claims 1-4 wherein the rare earth metal refractory oxide is lanthanum oxide.

6. A process according to any one of claims 1-5 wherein the composition is heated to a temperature of at least 1200°C.

7. A process according to any one of claims 1-6 wherein the composition is heated in a flowing stream of air or oxygen containing inert gas or in a non-reducing atmosphere.

8. The use of the sintered alumina-based composition as produced by the process of any one of claims 1-7 as a catalyst.

6

EP 0 308 140 B2

9. The use of the sintered alumina-based composition produced by the process of any one of claims 1-7 in the steam reforming of hydrocarbon feeds.

**Patentansprüche**

1. Verfahren zur Herstellung einer Zusammensetzung auf Tonerde-Basis zur Verwendung als Katalysator, umfassend das Sintern einer Zusammensetzung, die vor dem Sintern im wesentlichen $\gamma$-Aluminiumoxid mit einer Schüttdichte von wenigstens 0,6 g/ml und einem Porenvolumen von weniger als 0,6 ml/g, ein Metall-Sintermittel der Gruppe VIII und ein feuerfestes Oxid eines Seltenerdmetalls umfaßt, durch Erhitzen auf eine Temperatur von wenigstens 1000 °C und Isolieren einer gesinterten Zusammensetzung auf Tonerde-Basis.

2. Verfahren nach Anspruch 1, worin die Tonerde eine sphäroidale Tonerde ist.

3. Verfahren nach Anspruch 1 oder 2, worin das Sintermittel ein Oxid eines Elements der Gruppe VIII des Periodensystems ist.

4. Verfahren nach Anspruch 3, worin das Sintermittel Nickeloxid ist.

5. Verfahren nach irgendeinem der Ansprüche 1 bis 4, worin das feuerfeste Oxid eines Seltenerdmetalls Lanthanoxid ist.

6. Verfahren nach irgendeinem der Ansprüche 1 bis 5, worin die Zusammensetzung auf eine Temperatur von wenigstens 1200 °C erhitzt wird.

7. Verfahren nach irgendeinem der Ansprüche 1 bis 6, worin die Zusammensetzung in einem fließenden, ein Inertgas enthaltenden Luft- oder Sauerstoff-Strom oder in einer nicht-reduzierenden Atmosphäre erhitzt wird.

8. Verwendung der mittels des Verfahrens nach irgendeinem der Ansprüche 1 bis 7 hergestellten gesinterten Zusammensetzung auf Tonerde-Basis als Katalysator.

9. Verwendung der mittels des Verfahrens nach irgendeinem der Ansprüche 1 bis 7 hergestellten gesinterten Zusammensetzung bei der Wasserdampf-Reformierung von Kohlenwasserstoff-Einsatzmaterialien.

**Revendications**

1. Procédé de fabrication d'une composition à base d'alumine destinée à être utilisée comme catalyseur, lequel procédé comprend le frittage d'une composition, qui, avant frittage, contient de l'alumine en majeure partie gamma ayant une densité apparente d'au moins 0,6 g/ml et un volume de pores inférieur à 0,6 ml/g, un métal du groupe VIII comme agent de frittage et un oxyde réfractaire d'un métal des terres rares, par chauffage à une température d'au moins 1 000 °C et le recueil d'une composition frittée à base d'alumine.

2. Procédé selon la revendication 1 dans lequel l'alumine est de l'alumine sphéroïdale.

3. Procédé selon l'une des revendications 1 ou 2 dans lequel l'agent de frittage est un oxyde d'un élément du groupe VIII du tableau périodique.

4. Procédé selon la revendication 3, dans lequel l'agent de frittage est l'oxyde de nickel.

5. Procédé selon l'une quelconque des revendications 1 à 4 dans lequel l'oxyde réfractaire d'un métal des terres rares est l'oxyde de lanthane.

6. Procédé selon l'une quelconque des revendications 1 à 5 dans lequel la composition est chauffée à une température d'au moins 1 200 °C.

7

7. Procédé selon l'une quelconque des revendications 1 à 6 dans lequel la composition est chauffée dans un courant d'air ou d'oxygène contenant un gaz inerte ou dans une atmosphère non-réductrice.

8. Utilisation comme catalyseur de la composition à base d'alumine frittée fabriquée selon le procédé de l'une quelconque des revendications 1 à 7.

9. Utilisation de la composition à base d'alumine frittée fabriquée par le procédé de l'une quelconque des revendications 1 à 7 dans le reformage à la vapeur des hydrocarbures.

# *FIG.1*

Attrition Rate vs. Bulk Density Curves for Ni/Al₂O₃/1200°C and La/Ni/Al₂O₃/1200°C Catalysts.

FIG. 2  P.S.D of Ni/Al₂O₃ Catalysts.

FIG.3  P.S.D. of Ni/La/Al₂O₃ Catalysts.

EP 0 308 140 B2